# EUROPÄISCHE PATENTANMELDUNG

(11) **EP 1 661 954 A1**
(43) Veröffentlichungstag der Anmeldung: **31.05.2006**
(21) Anmeldenummer: 05109577.6
(22) Anmeldetag: 14.10.2005
(51) Int. Cl.: C09D 5/03, C09D 201/00, C09D 177/00

(54) **Thermoplastische Kunststoffpulverformulierung für Beschichtungen mit einem metallischen, insbesondere edelstahlähnlichen Farbeindruck**

(30) Priorität: 27.11.2004 DE 202004018390 U
(71) Anmelder: Degussa AG, 40474 Düsseldorf (DE)
(72) Erfinder: Richter, Alexander, Dr., 45657, Recklinghausen (DE); Franz, Wolfgang, 45731 Waltrop (DE); Renners, Holger, 46342 Velen (DE); Schiffer, Thomas, Dr., 45721 Haltern am See (DE)

(57) **Zusammenfassung**

Die Erfindung betrifft ein pulverförmiges thermoplastisches Polymer oder einen pulverförmigen Blend aus zwei oder mehr thermoplastischen Polymeren oder eine Mischung aus zwei oder mehr pulverförmigen thermoplastischen Polymeren mit einem mittleren Korndurchmesser von 40 bis 250 µm, das dadurch gekennzeichnet, dass, bezogen auf die Menge an Polymerpulver, 0,01 bis 10 Teile eines pulverförmigen Metallpulvers enthalten sind.

## Beschreibung

Pulverförmige thermoplastische Polymere werden seit mehreren Jahrzehnten für die Beschichtung von z. B. Metallteilen verwendet. Eines der bevorzugten Verfahren ist die Beschichtung von Metallteilen in einem Wirbelbett. Das pulverförmige thermoplastische Polymer wird in einem Behälter platziert, durch einen porösen Boden in diesem Behälter wird ein definierter Luftstrom geblasen, der das im Behälter befindliche pulverförmige thermoplastische Polymer fluidisiert. Ein Metallteil, das auf eine Temperatur oberhalb des Schmelzpunktes des pulverförmigen thermoplastischen Polymers vorgewärmt wurde, wird in das fluidisierte Pulverbad getaucht. Bei Kontakt des pulverförmigen thermoplastischen Polymers mit der heißen Metalloberfläche wird das Pulver aufgeschmolzen, zerfließt und bildet unter geeigneten Prozessbedingungen eine glatte und vollständige Polymerschicht auf der Metalloberfläche. Um ungewollte Nebenreaktionen der noch heißen Polymerbeschichtung zu vermeiden (z. B. Oxidation durch Luftsauerstoff und damit Eintritt einer Verfärbung der Polymerschicht), kann das noch heiße Metallteil mit der aufgebrachten Polymerbeschichtung abgeschreckt werden (z. B. in kaltem Wasser).

Da unter diesen Verfahrensbedingungen die Polymerbeschichtung eine vergleichsweise hohe Transparenz aufweisen kann, ist es notwendig, für eine farblich deckende und gleichmäßige Beschichtung die Beschichtung zu pigmentieren. Die Pigmentierung von pulverförmigen thermoplastischen Polymeren mit z. B. TiO₂ ist eine bekannte und häufig verwendete Modifizierung. Die weißen TiO₂-Partikel besitzen eine besonders hohe Deckkraft. Neben der Pigmentierung mit TiO₂ können ergänzend oder auch alternativ andere Pigmente verwendet werden, um bestimmte Farbeindrücke zu erhalten. Auf diese Weise lässt sich ein breites Spektrum von hellen bis dunklen Farbtönen abdecken.
Die Herstellung des pigmentierten pulverförmigen thermoplastischen Polymers kann auf verschiedene Weise erfolgen, beispielhaft seien hier die beiden gebräuchlichsten Verfahren genannt: Die Masseeinfärbung eines thermoplastischen Polymers mit Pigmenten durch Extrusion und nachfolgender Vermahlung und die Einfärbung eines thermoplastischen Polymerpulvers mit Pigmenten im Dry-Blend-Verfahren.

Mit den klassischen Pigmenten lassen sich thermoplastische Polymerüberzüge mit zumeist kräftigen Farbtönen erzielen, die das Licht diffus streuen. Schwieriger sind dagegen Metallic-Effekte mit hohen winkelspezifischen Reflexionsgraden zu realisieren. Bis zu einem gewissen Glanzgrad eignen sich hierfür spezielle anorganische Schichtsilikate, die zum Teil jedoch scherempfindlich sind. Obschon in den letzten Jahren deutliche Fortschritte erzielt wurden, wirken metallic-farbene handelsübliche Polymerüberzüge gegenüber hochpolierten Metalloberflächen wie gebürstetem Edelstahl oder Aluminium immer noch matt und stumpf.

Aufgabenstellung war daher, ein pigmentiertes pulverförmiges thermoplastisches Polymer zur Verfügung zu stellen, dessen Beschichtung auf einem Metallteil einen metallischen, insbesondere aber einen edelstahlähnlichen Farbeindruck hervorbringt.

Die Aufgabenstellung wurde gemäß den Ansprüchen dadurch gelöst, indem man ein pulverförmiges thermoplastisches Polymer im Dry-Blend-Verfahren mit einer Pigmentmischung homogen gemischt hat, die ein Stahlpigment enthält. Die entsprechende Pigmentmischung enthält neben dem pulverförmigen Edelstahlpigment weitere Pigmente, die die Farbwirkung unterstützen. Dazu zählen TiO₂, Ruß, Glimmer, Effektpigmente, anorganische und organische Pigmente usw. Neben den Pigmenten können weitere Additive, wie zum Beispiel optische Aufheller, Wärmestabilisatoren, Säurestabilisatoren, Riesel- und Wirbelhilfsmittel usw., eingesetzt werden, die auch in den handelsüblichen Polymerpulvern zum Einsatz kommen, insbesondere um die chemischen und mechanischen Eigenschaften des Polymerpulvers positiv zu beeinflussen.

Erfindungsgemäß ist es gelungen, mit diesem auf diese Weise pigmentierten pulverförmigen thermoplastischen Polymer ein Metallteil zu beschichten. Die entstandene Beschichtung weist auf diesem Metallteil den gewünschten edelstahlähnlichen, metallischen Farbeindruck auf. Neben den Metallteilen können selbstverständlich auch andere hitzebeständige Materialien wie zum Beispiel Keramiken beschichtet werden.

Als thermoplastische Polymere eignen sich Polyamide, Copolyamide, Polyester, Copolyester, Polyolefine (z.B. Polypropylen, Polyethylen), Comonomer modifizierte Polyolefine oder seitengruppenmodifizierte Polyolefine (z.B. Polypropylen mit eingeführten Säuregruppen), PVC, Polyarylenetherketone, LCP (Flüssigkristalline Polymere), PPS (Polyphenylensulfid) usw. entweder allein oder in Kombination als Blend oder Mischung. Besonders bevorzugt werden Polyamid 11 und Polyamid 12 eingesetzt. Die thermoplastischen Polymeren haben mittlere Korndurchmesser von 10 - 500 µm, bevorzugt 40 bis 250 µm, insbesondere bevorzugt mittlere Korndurchmesser von 70 bis 130 µm.

Dem Polymerpulver werden 0,01 bis 10 Teile, bevorzugt 0,1 bis 5 Teile und ganz besonders bevorzugt 1 bis 3 Teile eines pulverförmigen Metallpulvers hinzugefügt. Bei dem Metallpulver handelt es sich um ein chemisch inertes Metallpulver. Es können handelsübliche Polymerpulver, z.B. von der Firma Novamet eingesetzt werden.

### Beispiele:

### Beispiel 1

### Einarbeitung von Stahlpigmenten im Dry-Blend

Zu 100 Teilen VESTOSINT (Polyamid 12-Fällpulver), mit einer für Wirbelsinterpulver typischen Kornverteilung (d50 = 100 µm) wurden 3,2 Teile einer Pigmentmischung, die 65 % "Stainless steel flake fine leafing grade"-Stahlpigment von Novamet Speciality Products Corporation, 25% Titandioxid und 10% Schichtsilikat mit einer Schichtdicke von 40-200 nm enthielt, im Dry-Blend-Verfahren gemischt. Die Mischung wurde bei Raumtemperatur mit 1 500 U/min unter Benutzung eines MTI-M20-Mischers angefertigt.

### Beispiel 2

### Einarbeitung von Stahlpigmenten im Heiz-/Kühlmischer

Zu 100 Teilen VESTOSINT (Polyamid 12-Fällpulver), mit einer für Wirbelsinterpulver typischen Kornverteilung (d50 = 100 µm) wurden bis zu 10Teile "Stainless steel flake fine leafing grade"-Stahlpigment von Novamet Speciality Products Corporation im Dry-Blend-Verfahren, unter Benutzung einer Thyssen-Henschel Heiz-/Kühl-Mischkombination bei 2 500 U/min und erhöhter Temperatur 3 Minuten gemischt.

### Beispiel 3

### Einarbeitung von Stahlpigmenten im Heiz-/Kühlmischer

Zu 100 Teilen VESTOSINT (Polyamid 12-Fällpulver), mit einer für Wirbelsinterpulver typischen Kornverteilung (d50 = 100 µm) wurde 1 Teil "Stainless steel flake standard leafing grade"-Pigment im Dry-Blend-Verfahren, unter Benutzung einer Thyssen-Henschel Heiz-/Kühl-Mischkombination bei 2 500 U/min und erhöhter Temperatur 3 Minuten gemischt.

### Beispiel 4

### Beschichtung eines Stahlteils mit einem pigmentierten Pulver aus den Beispielen 1 oder 2 oder 3

In einer Wirbelfritte wurde ein entsprechend Beispiel 1 oder 2 oder 3 pigmentiertes Vestosint PA 12 Fällpulver fluidisiert. Ein vorgewärmtes Metallteil mit einer Oberflächentemperatur von ca. 250 °C wurde in die Wirbelfritte mit dem fluidisierten Pulver kurz eingetaucht. Nach dem Herausnehmen des Metallteils wurde das eingetauchte Metallteil gegebenenfalls noch einmal nachträglich erwärmt.
Das beschichtete Metallteil wurde nach 30 Sekunden mit Wasser abgekühlt und abgetrocknet. Mit den wie beschrieben hergestellten Pulvern sind Muster beschichtet worden (Drähte, Platten, Blöcke). Die Beschichtung verlief ohne Probleme und führte zu glatten, geschlossenen Oberflächen mit dem gewünschten edelstahlanmutenden Farbeffekt.

## Patentansprüche

1. Pulverförmiges thermoplastisches Polymer oder pulverförmiger Blend aus zwei oder mehr thermoplastischen Polymeren oder eine Mischung aus zwei oder mehr pulverförmigen thermoplastischen Polymeren mit einem mittleren Korndurchmesser von 40 bis 250 µm,
**dadurch gekennzeichnet,**
**dass**, bezogen auf die Menge an Polymerpulver, 0,01 bis 10 Teile eines pulverförmigen Metallpulvers enthalten sind.

2. Pulverförmiges thermoplastisches Polymer nach Anspruch 1,
**dadurch gekennzeichnet,**
**dass** als Polymere Polyamide, Polyester, Polyolefine, PVC, Polyarylenetherketone, LCP oder PPS allein oder in Kombination eingesetzt werden.

3. Pulverförmiges thermoplastisches Polymer nach Anspruch 1 oder 2,
**dadurch gekennzeichnet,**
**dass** als Polymere Polyamid 11 oder Polyamid 12 allein oder in Kombination eingesetzt werden.

4. Pulverförmiges thermoplastisches Polymer nach Anspruch 1,
**dadurch gekennzeichnet,**
**dass** es sich bei dem Metallpulver um ein chemisch inertes Metallpulver handelt.

5. Pulverförmiges thermoplastisches Polymer nach Anspruch 1,
**dadurch gekennzeichnet,**
**dass** es sich bei dem Metallpulver um Edelstahlpulver handelt.

6. Pulverförmiges thermoplastisches Polymer nach Anspruch 1,
**dadurch gekennzeichnet,**
**dass** die Mischung zusätzliche Additive enthält.

7. Pulverförmiges thermoplastisches Polymer nach Anspruch 6,
**dadurch gekennzeichnet,**
**dass** als zusätzliche Additive optische Aufheller, Wärmestabilisatoren und Säurestabilisatoren eingesetzt werden.

8. Pulverförmiges thermoplastisches Polymer nach Anspruch 1,
**dadurch gekennzeichnet,**
**dass** die Mischung zusätzliche Pigmente enthält.

9. Pulverförmiges thermoplastisches Polymer nach Anspruch 8,
**dadurch gekennzeichnet,**
**dass** die Mischung als zusätzliche Pigmente TiO₂, Ruß, Glimmer, Effektpigmente, anorganische und organische Pigmente enthält.
